# EUROPÄISCHE PATENTSCHRIFT

(11) **EP 1 708 865 B1**
(45) Veröffentlichungstag und Bekanntmachung des Hinweises auf die Patenterteilung: **25.03.2009**
(21) Anmeldenummer: 04804158.6
(22) Anmeldetag: 22.12.2004
(51) Int. Cl.: B29C 45/16

(54) **VERBUNDKÖRPER, VERFAHREN ZU DESSEN HERSTELLUNG UND DESSEN VERWENDUNG**
COMPOSITE BODIES, METHOD FOR THE PRODUCTION THEREOF AND USE THEREOF
CORPS COMPOSITE, PROCEDE DE REALISATION ET SON UTILISATION

(30) Priorität: 24.12.2003 DE 10361230
(43) Veröffentlichungstag der Anmeldung: 11.10.2006
(73) Patentinhaber: Ticona GmbH, 65451 Kelsterbach (DE)
(72) Erfinder: ZIEGLER, Ursula, 55130 Mainz (DE); REIL, Frank, 64342 Seeheim-Jugenheim (DE); KURZ, Klaus, 65451 Kelsterbach (DE)
(86) Internationale Anmeldenummer: PCT/EP2004/014562
(87) Internationale Veröffentlichungsnummer: WO 2005/065913

(56) Entgegenhaltungen:
- EP-A- 0 837 097
- EP-A- 1 118 458
- DE-A1- 10 017 486
- DE-A1- 19 845 235
- US-A- 6 044 963
- US-B1- 6 296 797
- US-B1- 6 312 824
- ANONYMOUS: "Armitel" DSM ENGINEERING PLASTICS, [Online] XP002323834 Gefunden im Internet: <URL:http://www.dsm.com/en_US/downloads/de p/Arnitel_brochure_02.pdf> [gefunden am 2005-04-08]

## Beschreibung

Die vorliegende Erfindung betrifft Verbundkörper aus einer Kombination des technischen Werkstoffs Polyoxymethylen mit direkt angeformten Funktionselementen aus einem oder mehreren thermoplastischen Polyester-Elastomeren (TPE-E), deren Herstellung sowie deren Verwendung.

Der technische Werkstoff Polyacetal, d.h. Polyoxymethylen (nachstehend aus als POM oder Polyacetal bezeichnet), hat ausgezeichnete mechanische Eigenschaften und ist darüber hinaus im allgemeinen auch widerstandsfähig gegen alle üblichen Lösemittel und Kraftstoffe. Formteile aus Polyoxymethylen werden daher u.a. im Automobilbau, insbesondere auch in kraftstofführenden Systemen eingesetzt.

Aufgrund der guten Festigkeit und Härte verbunden mit einer ausgezeichneten Rückstellelastizität finden Formteile aus Polyacetal in allen Bereichen des täglichen Lebens sehr häufig Anwendung für Schnapp-Verbindungen, insbesondere Clips.

Die ausgezeichneten Gleit-Reib-Eigenschaften begründen den Einsatz von Polyoxymethylen für viele bewegliche Teile, z.B. Getriebeteile, Umlenkrollen, Zahnräder oder Verstellhebel. Aufgrund der sehr guten mechanischen Beständigkeit und Resistenz gegen Chemikalien werden auch Gehäuse und Tastaturen aus Polyoxymethylen hergestellt.

POM weist aber bei Raumtemperatur einen niedrigen mechanischen Dämpfungsfaktor auf, was in einigen Anwendungsfällen den Einsatz von weichen Dämpfungselementen erforderlich macht. Beim Einbau von Formteilen aus Polyoxymethylen ist zudem oftmals an Verbindungsstellen eine Abdichtung erforderlich. Die hohe Oberflächenhärte von Formteilen aus POM und der niedrige Gleitreibungskoeffizient von POM können zu einem Verrutschen von aufliegenden Gegenständen führen und die Bedienungssicherheit beispielsweise von Schaltelementen und Bedienungselementen aus POM, einschränken.

Es werden andererseits auch immer öfter Kombinationen aus harten und weichen Werkstoffen eingesetzt, um die besonderen Eigenschaften dieser Werkstoffe miteinander zu kombinieren. Der harte Werkstoff soll dabei die Festigkeit der Bauteile bewirken, der weiche Werkstoff übernimmt aufgrund seiner elastischen Eigenschaften Funktionen zur Dichtung oder Vibrations- und Geräuschdämpfung oder bewirkt eine Veränderung der Oberflächenhaptik.

Wichtig bei diesen Anwendungen ist eine ausreichende Haftung zwischen der harten und weichen Komponente.

Bislang werden entweder Dichtungen und Dämpfungselemente separat bereitgestellt und üblicherweise in einem zusätzlichen Arbeitsschritt mechanisch verankert oder verklebt, was zusätzliche Arbeit und teilweise erhebliche Zusatzkosten verursacht. Eine neuere und wirtschaftlichere Methode ist der Mehrkomponentenspritzguss. Hierbei wird z.B. eine zweite Komponente auf eine vorgeformte erste Komponente aufgespritzt. Die erreichbare Haftung zwischen den beiden Komponenten ist für dieses Verfahren von großer Bedeutung. Im Mehrkomponentenspritzguss kann diese Haftung zwar in formschlüssigen Verbindungen durch Anbringen von Hinterschnitten oft noch verbessert werden. Jedoch ist eine gute Grundhaftung durch chemische Affinität zwischen den ausgewählten Komponenten oft Voraussetzung für deren Einsatz.

Allgemein bekannt sind z.B. nach dem Mehrkomponentenspritzguss hergestellte Kombinationen aus Polypropylen (PP) und Polyolefinelastomeren oder Styrol/Olefinelastomeren, Polybutylenterephthalat (PBT) mit Polyesterelastomeren oder Styrol/Olefinelastomeren. Auch Polyamide zeigen Haftung zu sehr vielen Weichkomponenten.

Thermoplastische Elastomere sollen mit Thermoplasten im Overmoulding-verfahren grundsätzlich kombinierbar sein, wobei z.B. Polyurethan-Elastomere (TPE-U) eine Haftung an POM aufweisen (Kunststoffe 84 (1994) S. 709 und Kunststoffe 86, (1996), S. 319). Für die Kombination POM mit TPE-E (Polyester-Elastomer) geben diese Schriften keine Haftung an. Gemäß diesen Übersichtsartikeln ist also bislang keine haftende Verbindung aus POM und TPE-E bekannt.

In der EP-A-818,294 werden Achsen oder Rollkörper mit speziellem Design beschrieben, welche Kombinationen von Verbunden aus einem ersten und zweiten thermoplastischen Material umfassen. Als mögliche Materialien sind unter anderem POM und thermoplastische Elastomere auf der Basis von Polyether-Block-Estern aufgezählt. Die Herstellung der Verbunde kann durch adhäsiven, kohäsiven oder mechanischen Verbund erfolgen. Konkrete Beispiele für einen adhäsiven oder kohäsiven Verbund POM/TPE-E sind nicht aufgeführt. Aufgrund der problematischen Herstellung derartiger Verbunde muss in Anbetracht des Fehlens von konkreten Beispielen davon ausgegangen werden, dass diese Schrift keine adhäsiven bzw kohäsiven POMITPE-E Verbunde offenbart.

Aus EP-A-816,043 sind Materialkombinationen aus harten thermoplastischen Kunststoffen, wie POM, und weichen thermoplastischen Kunststoffen bekannt. Dieses Dokument gibt keinen Hinweis auf eine haftende Verbindung zwischen POM und thermoplastischen Polyester-Elastomeren.

Die WO-A-99/16,605 beschreibt Materialkombinationen POM / thermoplastisches Polyurethan-Elastomer. Thermoplastische Polyester-Elastomere sind ebenfalls nicht erwähnt.

Aus der US-A-6,082,780 sind mit Thermoplast oder Elastomer umspritzte Rohre bekannt. Es werden unterschiedlichste Polymere für das Rohr bzw. für die Umhüllung offenbart. Als Material für das Rohr und/oder die Hülle sind unter anderem auch POM und thermoplastische Polyester-Elastomere aufgezählt. Neben einer Reihe von Polymerkombinationen, für die haftende Verbunde zwischen den Materialien möglich sind offenbart dieses Dokument zahlreiche Kombinationen, die nicht zur Haftung führen. Aufgrund der problematischen Herstellung von Verbunden zwischen POM und thermoplastischen Elastomeren muss in Anbetracht des Fehlens von konkreten Beispielen davon ausgegangen werden, dass diese Schrift keine haftenden Verbunde POM/TPE-E offenbart.

In der WO 99/30,913 werden drehbewegliche Kunststoffrollen beschrieben. In diesem Dokument werden thermoplastische Polyester-Elastomere nicht aber deren Kombinationen mit Polyoxymethylen offenbart.

Die DE-A-4,109,936 beschreibt innere Türgriffe. In diesem Dokument werden unter anderem Polyoxymethylen als "Hart-Kunststoff" und unter anderem thermoplastische Polyester-Elastomere als "Weich-Kunststoff' erwähnt. Die Kombination von Polyoxymethylen mit Polyester-Elastomeren sowie deren adhäsive oder cohäsive Verbindung lässt sich dieser Schrift nicht entnehmen, da weitere Elastomertypen aufgeführt sind, die keine haftende Verbindung mit den aufgezählten "Hart-Kunststoffen" eingehen.

Im Stand der Technik werden Kombinationen von unterschiedlichsten Hart- und Weichkomponenten beschrieben (vergl. WO 01/16232 A1, DE 100 17 486 A1, JP 08/065,785 und DE 41 09 936). In diesen Dokumenten sind zwar Polyacetal und Polyester-Elastomer jeweils in der Aufzählung einer Vielzahl von möglichen harten bzw. weichen Komponenten aufgeführt. Bei einer willkürlichen Kombination der jeweils aufgezählten harten und weichen Komponenten wird in der Regel ohne besondere verfahrenstechnische Maßnahmen bzw. in manchen Fällen überhaupt keine haftende Verbindung zwischen Hart- und Weichkomponente erzielt.

In der EP 1118458 A werden Polyacetal Verbundstoffe beschrieben, die aus einem Polyacetal-Harz (A) und entweder einem thermoplastischen Harz oder einem Elastomer (B), das Säuregruppen aufweist, bestehen, wobei (A) und (B) direkt aneinander haften. In der EP 837097 werden Blockcopolymere beschrieben, die ein chemisch modifiziertes Polyolefin und einem thermoplastischen Polyurethan, Copolymer oder Copolyamid und ein Kupplungsreagenz enthalten. In keiner der zitierten Schriften wird jedoch die Kombination von Polyacetal mit Polyetherester-Elastomeren offenbart.

In der DE 198 45 235 werden Verbundkörper aus Polyacetal und einem modifizierten Styrol-Olefin-Elastomeren beschrieben. Das Styrol-Olefin-Elastomer wird durch Compoundierung mit nicht-olefinischen Termoplastmaterial modifiziert, wobei das nicht-olefinische Thermoplastmaterial mehr als zehn mögliche Polymere umfaßt. Als erfindungsgemäß wird u.a. ein Compound aus Styrol-Olefin-Elastomeren mit thermoplastischen Polyetherester-Elastomeren beschrieben.
Verbundkörper aus Polyacetal und unverblendeten, also reinen Polyetherester-Elastomer mit einer Verbundfestigkeit von mindestens 0,5 N/mm2 werden nicht beschrieben. Die DE 198 45 235 gibt keinen Hinweis über die Haftungseigenschaften von Verbundkörpern aus Polyacetal und Polyetherester-Elastomeren.

Aufgabe der vorliegenden Erfindung ist es, neue Verbundkörper aus Polyacetal mit direkt angeformten Funktionselementen aus Polyester- Elastomeren nach dem Mehrkomponentenspritzguß bereitzustellen, die sich durch hohe Verbundfestigkeiten auszeichnen.

Eine weitere Aufgabe der vorliegenden Erfindung besteht in dem Bereitstellen eines Verfahrens, mit dem Verbundkörper aus Polyacetal mit direkt angeformten Funktionselementen aus Polyester-Elastomeren hergestellt werden können, die hohe Verbundfestigkeiten aufweisen.

Die vorliegende Erfindung betrifft einen Verbundkörper enthaltend Polyacetal und mindestens ein thermoplastisches Polyester-Elastomeres gebildet durch ein Polyacetal-Formteil, das teilweise oder vollständig mit dem thermoplastischen Polyester-Elastomeren beschichtet ist oder an das ein oder mehrere Formteile aus dem thermoplastischen Polyester-Elastomeren direkt angeformt sind, wobei das Polyacetal und das thermoplastische Polyester-Elastomere durch Aufspritzen des thermoplastischen Polyester-Elastomeren auf das Polyacetal-Formteil adhäsiv miteinander verbunden sind, das Polyester-Elastomer ein Polyetherester-Elastomer ist und die Verbundfestigkeit bei Zugbelastung zwischen dem Polyacetal und dem thermoplastischen Polyester-Elastomeren mindestens 0,5 N/mm² beträgt.

Die Verbundfestigkeit bei Zugbelastung zwischen Polyacetal und thermoplastischem Polyester-Elastomer, die im erfindungsgemäßen Verbundkörper vorliegt bzw. die durch das Verfahren gemäß der Erfindung erzielt wird, beträgt mindestens 0,5 N/mm², vorzugsweise mindestens 1,0 N/mm². Dadurch wird eine einwandfreie Handhabung gewährleistet. Für Funktionsteile ist eine höhere Haftung - je nach Beanspruchung - anzustreben.

Als Polyacetal, das bei dem erfindungsgemäßen Verbundkörper Verwendung findet, kann ein beliebiges Polyacetal eingesetzt werden, und zwar aus der Gruppe der bekannten Polyoxymethylene, wie sie beispielsweise in der DE-A 29 47 490 beschrieben sind. Es handelt sich hierbei im allgemeinen um unverzweigte lineare Polymere, die in der Regel mindestens 80 Mol %, vorzugsweise mindestens 90 Mol %, Oxymethyleneinheiten (-CH₂-O-) enthalten. Der Begriff Polyoxymethylene umfaßt dabei sowohl Homopolymere des Formaldehyds oder seiner cyclischen Oligomeren wie Trioxan oder Tetroxan als auch entsprechende Copolymere.

Homopolymere des Formaldehyds oder Trioxans sind solche Polymere, deren Hydroxylendgruppen in bekannter Weise chemisch gegen Abbau stabilisiert sind, z.B. durch Veresterung oder Veretherung.

Copolymere sind Polymere aus Formaldehyd oder seinen cyclischen Oligomeren, insbesondere Trioxan, und cyclischen Äthern, cyclischen Acetalen und/oder linearen Polyacetalen.

Als Comonomere können i) cyclische Äther mit 3, 4 oder 5, vorzugsweise 3 Ringgliedern, ii) von Trioxan verschiedene cyclische Acetale mit 5 bis 11, vorzugsweise 5, 6, 7 oder 8 Ringgliedern und iii) lineare Polyacetale, jeweils in Mengen von 0,1 bis 20, vorzugsweise 0,5 bis 10 Mol-%, eingesetzt werden.

Die eingesetzten Polyacetal-Polymere haben im allgemeinen einen Schmelzindex (MFR-Wert 190/2,16) von 0,5 bis 75 g/10 min (ISO 1133). Es können auch modifizierte POM-Typen eingesetzt werden, die zum Beispiel Schlagzähmodifikatoren, Verstärkungsstoffe, wie Glasfasern, oder andere Additive enthalten.

Zu diesen modifizierten POM Typen zählen beispielsweise Blends aus POM mit TPE-U (Thermoplastisches Polyurethan-Elastomer), mit MBS (Methylmethacrylat/Butadien/Styrol-core-shell-Elastomer), mit Methylmethacrylat/Acrylat-core-shell-Elastomer, mit PC (Polycarbonat), mit SAN (Styrol/Acrylnitril-Copolymer) oder mit ASA (Acrylat/Styrol/Acrylnitril Copolymer-Compound).

Als thermoplastische Polyester-Elastomere werden Multiblockcopolymere eingesetzt, die aus steifen Polyestersegmenten und flexiblen langkettigen Polyether- oder Polyestersegmenten aufgebaut sind.

TPE-E sind an sich bekannt. Beispiele dafür sind beschrieben in Handbook of Thermoplastic Polyesters, Vol. 1, S. 581-3, Wiley-VCH, Weinheim, 2002).

Bevorzugte thermoplastische Polyester-Elastomere sind Copolyester enthaltend die wiederkehrenden Struktureinheiten der Formeln I und II, welche durch Esterbindungen miteinander verknüpft sind

-O-G-O-CO-R¹-CO- (I)

-O-D-O-CO-R²-CO- (II),

worin G ein zweiwertiger Rest eines langkettigen Glykols nach dem Entfernen der Hydroxylgruppen ist,
D ein zweiwertiger Rest eines aliphatischen Glykols mit einem Molekularge-wicht von weniger als 250 nach dem Entfernen der Hydroxylgruppen bedeutet,
R¹ und R² unabhängig voneinander einen zweiwertigen Rest einer Dicarbonsäure nach dem Entfernen der Carboxylgruppen bedeuten, mit der Massgabe, dass wenigstens 70 Mol % der Reste R² zweiwertige aromatische Reste sind, dass 15 bis 95 Gew.%, bezogen auf den Copolyester, wiederkehrende Struktureinheiten der Formel II sind.

Die bevorzugten thermoplastischen Copolyester-Elastomere bestehen im wesentlichen aus den vorstehend beschriebenen wiederkehrenden langkettigen Estereinheiten der Formel I und aus den wiederkehrenden kurzkettigen Estereinheiten der Formel II

Der Begriff "langkettige Estereinheiten" beschreibt ein Reaktionsprodukt eines langkettigen Glykols mit einer Dicarbonsäure. Geeignete langkettige Glykole zur Herstellung der Copolyester weisen ein Zahlenmittel des Molekulargewichts von 400 bis 4.000 auf und zeigen einen Schmelzpunkt (DSC) unterhalb von 55°C. Bevorzugte langkettige Glykole zur Herstellung dieser Copolyester-Elastomeren sind Poly(alkylenoxid)-glykole, worin der Alkylenteil zwei bis acht Kohlenstoffatome aufweist, beispielsweise Poly(ethylenoxid)-glykol, Poly(1,2- und 1,3-propylenoxid)-glykol, Poly(tetramethylenoxid)-glykol, Poly(pentamethylenoxid)-glykol, Poly(octamethylenoxid)-glykol und Poly(1,2-butylenoxid)-glykol; statistische oder Block-Copolymere von Ethylenoxid mit 1,2-Propylenoxid; sowie Polyformale erhältlich durch Umsetzung von Formaldehyd mit Glykolen, wie Pentamethylenglykol, oder von Gemischen von Glykolen, wie von Gemischen aus Tetramethylenglykol und Pentamethylenglykol. Weitere bevorzugte langkettige Glykole sind aliphatische Polyester, wie z.B. Polybutylenadipat, Polybutylensuccinat oder Polycaprolacton. Weitere geeignete langkettige polymere Glykole leiten sich von Polybutadien-Glykolen oder von Polyisopren-Glykolen ab, sowie von Copolymeren aus diesen Einheiten und den entsprechenden hydrierten Derivaten dieser Glykole.

Besonders bevorzugt eingesetzte langkettige Glykole sind Poly(tetramethylen-oxid)-glykol mit einem Zahlenmittel des Molekulargewichts von 600 bis 2.000 und mit Ethylenoxid verkapptes Poly(propylenoxid)glykol mit einem Zahlenmittel des Molekulargewichts von 1.500 bis 2.800 und enthaltend 15 bis 35 % Ethylenoxid.

Die kurzkettigen Estereinheiten sind Reaktionsprodukte von Diolen niedrigen Molekulargewichts mit einer Dicarbonsäure oder einem Gemisch von Dicarbonsäuren.

Wenigstens 70 Mol % der kurzkettigen Estereinheiten weisen von aromatischen Dicarbonsäuren, wie Isophthalsäure oder insbesondere Terephthalsäure, abgeleitete Reste R² auf.

Diole niedrigen Molekulargewichts zur Umsetzung zu kurzkettigen Estereinheiten sind aliphatische Diole mit Molekulargewichten von weniger als 250. Der Begriff "aliphatische Diole" umfasst auch cycloaliphatische Diole.

Vorzugsweise werden Diole mit zwei bis fünfzehn Kohlenstoffatomen eingesetzt. Beispiele für bevorzugte Diole sind Ethylen-, Propylen-, Tetramethylen-, Pentamethylen, 2,2-Dimethyltrimethylen-, Hexamethylen- und Decamethylenglykol, Dihydroxycyclohexan, Cyclohexandimethanol und deren Gemische.

Anstelle der Diole können deren esterbildende Derivate eingesetzt werden, wie Ethylenoxid oder Ethylencarbonat.

Dicarbonsäuren, die zur Herstellung der beschriebenen langkettigen und kurzkettigen Estereinheiten eingesetzt werden können sind aliphatische, cycloaliphatische und/oder aromatische Dicarbonsäuren von niedrigem Molekulargewicht, das üblicherweise unterhalb von 300 liegt.

Der Begriff "Dicarbonsäuren" umfasst auch deren polyesterbildenden Derivate, beispielsweise Dicarbonsäurehalogenide, -ester oder -anhydride.

Unter "aliphatischen Dicarbonsäuren" sind im Sinne dieser Erfindung Carbonsäuren zu verstehen, die zwei Carboxylgruppen aufweisen, welche an unterschiedliche Kohlenstoffatome eines aliphatischen oder cycloalphatischen Kohlenwasserstoffes gebunden sind. Neben ethylenisch ungesättigten Dicarbonsäuren, wie Maleinsäure, werden insbesondere gesättigte Dicarbonsäuren verwendet.

Unter "aromatischen Dicarbonsäuren" sind im Sinne dieser Erfindung Carbonsäuren zu verstehen, die zwei Carboxylgruppen aufweisen, welche an unterschiedliche Kohlenstoffatome eines Benzolringes gebunden sind, der Teil eines Ringsystems sein kann. Die Carboxylgruppen können auch an Kohlenstoffatome unterschiedlicher Ringe gebunden sein. Mehrere Ringe können aneinander annelliert sein oder durch Brückengruppen, wie direkte C-C-Bindung, -O-, -CH₂- oder -SO₂ miteinander verknüpft sein.

Beispiele für aliphatische oder cycloaliphatische Dicarbonsäuren, die zur Herstellung der erfindungsgemäß zu verwendenden Polyester-Elastomeren eingesetzt werden können sind Sebazinsäure, 1,3-Ccyclohexandicarbonsäure, 1,4-Cyclohexandicarbonsäure, Adipinsäure, Glutarsäure, Bernsteinsäure,
Kohlensäure, Oxalsäure, Azelainsäure, Diethyldicarbonsäure, 2-Ethylsuberinsäure, 2,2,3,3-Tetramethylbernsteinsäure, Cyclopentandicarbon-säure, Decahydro-1,5-naphthalindicarbonsäure, 4,4'-Bicylohexyldicarbonsäure, Decahydro-2,6-naphthalindicarbonsäure, 4,4'-Methylen-bis-(cyclohexan-carbonsäure), 3,4-Furandicarbonsäure und 1,1-Cyclobutandicarbonsäure.

Bevorzugte aliphatische Carbonsäuren sind Cyclohexandicarbonsäuren und Adipinsäure.

Diese aliphatischen Dicarbonsäuren werden vorzugsweise zusammen mit Isophthalsäure und ganz besonders bevorzugt zusammen mit Terephthalsäure eingesetzt.

Beispiele für aromatische Dicarbonsäuren, die zur Herstellung der erfindungsgemäß zu verwendenden Polyester-Elastomeren eingesetzt werden können sind Phthalsäure, Isophthalsäure, Terephthalsäure, Dibenzosäure, substituierte Dicarboxyverbindungen mit zwei Benzolkernen, wie z.B. Bis-(p-carboxylphenyl)-methan, p-Oxy-(p-carboxylphenyl)-benzoesäure, Ethylen-bis-(p-oxybenzoesäure), 1,5-Naphthalindicarbonsäure, 2,6-Naphthalindicarbon-säure, 2,7-Naphthalindicarbonsäure, Phenanthrendicarbonsäure, Anthracen-dicarbonsäure, 4,4'-Sulfonyldibenzoesäure, und deren C₁₋₁₂-alkylsubstituierte oder anderweitig substituierte Derivate, wie z.B. Halogen-, Alkoxy- und Aryl-substituierte Derivate. Es können auch Hydroxylcarbonsäuren, wie p-(β-Hydroxyethoxy)-benzoesäure eingesetzt werden.

Vorzugsweise wird Terephthalsäure als aromatische Dicarbonsäure verwendet.

Die erfindungsgemäß eingesetzten Polyester-Elastomere weisen in ihren kurzkettigen Estereinheiten vorzugsweise mindestens 70 Mol % wiederkehrende Struktureinheiten auf, die sich von Ethylenterephthalateinheiten und/oder von 1,4-Butylenterephthalateinheiten ableiten.

Ganz besonders bevorzugt eingesetzte Polyester-Elastomere sind Polyetherester basierend auf Polybutylenterephthalat als steifes Segment und Polytetramethylenoxid als flexibles Segment.

Die erfindungsgemäß eingesetzten Polyester-Elastomeren weisen bevorzugt einen Härte-Bereich von etwa Shore A 65 bis etwa Shore D 75 auf. Die Härte ist dabei auch ein Maß für den Anteil der steifen Polyestersegmente zu den flexiblen langkettigen Polyestersegmenten.

Der Schmelzindex der Polyester-Elastomeren wird abhängig vom Aufschmelzverhalten der steifen Polyestersegmente bei verschiedenen Temperaturen gemessen. Er ist auch ein Maß für den Additionsgrad (Molmasse der Gesamtketten).

In dem erfindungsgemäß eingesetzten Polyacetal und/oder Polyester-Elastomer können übliche Zusatzstoffe enthalten sein, wie Stabilisatoren, Nukleierungsmittel, Entformungsmittel, Gleitmittel, Füll- und Verstärkungsstoffe, Pigmente, Ruß, Licht- und Flammschutzmittel, Antistatika, Weichmacher oder optische Aufheller. Die Zusatzstoffe liegen in üblichen Mengen vor.

Die Erfindung betrifft daher einen Verbundkörper aus Polyacetal und mindestens einem Polyester-Elastomeren, sowie ein Verfahren zu dessen Herstellung, wobei erst ein Formteil aus Polyacetal geformt wird, an das anschließend eine Beschichtung oder mindestens ein Formteil aus dem Polyester-Elastomeren angespritzt wird wobei das Polyacetal cohäsiv oder adhesiv mit dem Polyester-Elastomeren verbunden wird.

Der erfindungsgemäße Verbundkörper wird dabei durch ein Polyacetal-Formteil gebildet, das teilweise oder vollständig mit dem Polyester-Elastomeren beschichtet wurde oder an das ein oder mehrere Formteile, auch Funktionsteile genannt, aus dem Polyester-Elastomeren direkt angeformt wurden. Es kann sich dabei beispielsweise um ein flächiges Polyacetal-Formteil handeln, das auf einer Seite eine Schicht aus Polyester-Elastomeren trägt. Beispiele hierfür sind rutschfeste Unterlagen, Griffmulden, Bedien- und Schaltelemente, mit Dichtungen oder Dämpfungselementen versehene Funktionsteile sowie Innen- und Außenverkleidungen von Zweirädern, Kraft-, Luft-, Schienen- und Wasserfahrzeugen, die durch das Polyacetal die erforderliche Formstabilität und durch die Polyester-Elastomeren-Schicht die gewünschte Reibungseigenschaft, Dichtfunktion, Haptik oder Optik erhalten.

Der Verbundkörper kann aber auch aus einem oder mehreren Polyacetal-Formteilen beliebiger Gestalt bestehen, woran ein oder mehrere Formteile beliebiger Gestalt aus dem Polyester-Elastomeren direkt angeformt wurden. Der Ausdruck "direkt angeformt" soll im Rahmen der vorliegenden Erfindung so verstanden werden, dass die Funktionselemente direkt auf das Formteil aus Polyacetal, mit dem sie einen haftfesten Verbund eingehen sollen in einem Mehrkomponentenspritzgussverfahren aufgespritzt werden.

Durch die Verwendung der Polyester-Elastomeren können beispielsweise Dicht- oder Dämpfungselemente aus dem Elastomeren direkt an Formteile aus Polyacetal angeformt werden, ohne dass weitere Montageschritte erforderlich werden.

Durch den Wegfall der bisher benötigten Verarbeitungsschritte zur Montage von Funktionselementen ist eine erhebliche Kosteneinsparung bei der Produktion der erfindungsgemäßen Verbundkörper zu erzielen.

Die Herstellung des erfindungsgemäßen Verbundkörpers erfolgt nach dem allgemein bekannten Mehrkomponentenspritzgussverfahren, wobei zunächst das Polyacetal im Spritzgusswerkzeug geformt, d.h. vorgespritzt wird und anschließend eine Beschichtung oder ein Formteil aus dem Polyester-Elastomeren auf das Polyacetal-Formteil gespritzt wird.

Ein weiterer Gegenstand der Erfindung ist ein Verfahren zur Herstellung des zuvor genannten Verbundkörpers, wobei mindestens ein Polyacetal-Formteil und mindestens ein weiteres Formteil aus Polyester-Elastomer durch Mehrkomponentenspritzguss-verfahren aneinander angeformt werden, indem das Polyester-Elastomer auf das Polyacetal-Formteil gespritzt wird.

Bei der Fertigung des Formteils liegt die Massetemperatur dabei im üblichen Bereich, d.h. für die oben beschriebenen Polyacetale im Bereich von etwa 180 bis 240°C, vorzugsweise bei 190 bis 230°C. Das Werkzeug selbst wird vorzugsweise auf eine Temperatur im Bereich von 20 bis 140°C temperiert. Für die Form-Präzision und Dimensionsstabilität des harten Bauteilkörpers aus dem teilkristallinen Werkstoff Polyacetal ist eine Werkzeugtemperatur im oberen Temperaturbereich vorteilhaft.

Sobald die Kavität im Werkzeug vollständig gefüllt und der Nachdruck nicht weiter wirksam ist (Siegelpunkt), kann das Polyacetal-Formteil fertig ausgekühlt und als erster Teil des Verbundkörpers (Vorspritzling) entformt werden. In einem zweiten, nachgeschalteten separaten Spritzgießschritt wird dann z.B. dieser Vorspritzling in ein anderes Werkzeug mit einer ausgesparten Kavität eingelegt bzw. umgesetzt und das Material mit der geringeren Härte, d.h. das Polyester-Elastomer, in das Werkzeug eingespritzt und dabei auf das Polyacetal-Formteil aufgespritzt. Dieses Verfahren ist als Einlege- oder Umsetzverfahren bekannt. Für die nachfolgend erreichbare Haftung ist es besonders vorteilhaft, wenn das vorgespritzte Polyacetal-Formteil auf eine Temperatur im Bereich von 80°C bis knapp unter den Schmelzpunkt vorgewärmt wird. Damit wird ein Anschmelzen der Oberfläche durch das aufgespritzte Polyester-Elastomer und dessen Eindringen in die Grenzschicht erleichtert.

Das vorgespritzte Polyacetal-Formteil kann aber auch nur teilentformt werden und zusammen mit einem Teil des ursprünglichen Werkzeugs (z.B. der Angußplatte, der Ausstoßerseite oder nur einer Indexplatte) in eine weitere größere Kavität bewegt werden.

Eine andere Möglichkeit besteht darin, das Polyester-Elastomer ohne Zwischenöffnen der Maschine und Weitertransport des Vorspritzlings aus Polyacetal in das gleiche Werkzeug einzuspritzen. Dabei sind die für die Polyester-Elastomer-Komponente vorgesehenen Werkzeughohlräume beim Einspritzen der Polyacetal-Komponente zunächst durch verschiebbare Einsätze oder Kerne verschlossen und werden erst zum Einspritzen der Polyester-Elastomer Komponente geöffnet (Schiebertechnik). Diese Verfahrensvariante ist auch zum Erzielen einer guten Haftung besonders vorteilhaft, da bereits nach kurzer Kühlzeit die Schmelze des Polyester-Elastomeren auf einen noch heißen Vorspritzling trifft.

Gegebenenfalls können im Mehrkomponentenspritzgussverfahren weitere Formteile aus Polyacetal und dem Polyester-Elastomeren gleichzeitig oder in aufeinander folgenden Schritten aufgespritzt werden.

Beim Aufspritzen des Polyester-Elastomeren ist es für eine gute Haftung vorteilhaft, die Einstellungen für die Massetemperatur möglichst hoch zu wählen. Im allgemeinen liegt die Massetemperatur des Polyester-Elastomeren im Bereich von 200 bis 300°C und wird nach oben durch seine Zersetzung begrenzt. Die Werte für die Einspritzgeschwindigkeit sowie für den Einspritz- und Nachdruck sind maschinen- und formteilabhängig und sind den jeweiligen Gegebenheiten anzupassen.

Nach allen Verfahrensvarianten, mit oder ohne Entformung des Vorspritzlings wird das Werkzeug im zweiten Schritt auf eine Temperatur im Bereich von vorzugsweise 20°C bis 140°C temperiert. Je nach Konstruktion der Teile kann es sinnvoll sein, die Werkzeugtemperatur etwas abzusenken, um somit die Entformbarkeit und die Zykluszeiten zu optimieren. Nachdem Auskühlen der Teile wird der Verbundkörper entformt. Hierbei ist es bei der Werkzeug-konstruktion wichtig, die Auswerfer an geeigneter Stelle anzubringen, um eine Belastung der Werkstoff-Verbund naht zu minimieren. Auch eine ausreichende Entlüftung der Kavität im Nahtbereich ist bei der Werkzeugkonstruktion vorzusehen, um eine Behinderung der Verbindung zwischen den beiden Komponenten durch eingeschlossene Luft möglichst gering zu halten. Einen ähnlichen Einfluss übt auch die Art der Werkzeugwandrauhigkeit aus. Für die Ausbildung einer guten Haftung ist eine glatte Oberfläche an der Stelle der Verbundnaht vorteilhaft, da dann weniger Luft in der Oberfläche eingeschlossen wird.

In dem erfindungsgemäßen Verfahren weisen die Komponenten unterschiedliche Härte auf. Verwendung finden die erfindungsgemäßen Verbundkörper als Verbindungselemente in Form von Fittings, Kupplungen, Rollen, Lager, als Funktionsteile mit integrierten Dicht- und/oder Dämpfungseigenschaften sowie als rutschfeste und grifffreundliche Elemente. Hierzu zählen insbesondere Gehäuse im Automobilbau wie Türschlossgehäuse, Fensterhebergehäuse oder Schiebedachdichtelemente, ferner Befestigungselemente mit integrierter Abdichtung wie Clipse mit Dichtringen oder -scheiben, Zierleisten mit integrierter Dichtlippe, Abdichtungselemente zum Ausgleich von Dehnungsfugen, Befestigungselemente mit guten Dämpfungseigenschaften, z.B. Clipse mit schwingungs- und geräuschdämpfenden Kernen, Getriebeteile wie Zahnräder mit Dämpfungselementen, Zahnradgetriebe mit integrierten flexiblen Kupplungen, rutschfeste und grifffreundliche Elemente wie Schalthebel oder -knöpfe oder Griffflächen an Elektrogeräten oder Schreibstiften sowie Kettenglieder mit elastischer Oberfläche.

Die Haftfestigkeit zwischen der harten Polyacetal-Komponente und der weichen, thermoplastischen Polyester-Elastomer-Komponente kann mittels eines in der WO-A-99/16,605 beschriebenen Messverfahrens ermittelt werden.

Die nachfolgenden Beispiele erläutern die Erfindung ohne diese zu begrenzen.

### Beispiele 1-24

Für die Spritzgießversuche wurde eine Dreikomponenten-Spritzgußmaschine mit einer Schließkraft von 2000 kN verwendet (Typ FM 175/200, Hersteller Klöckner Ferromatik, Malterdingen, BRD). Von den vorhandenen drei Schnecken wurde ein Aggregat mit einem Durchmesser von 45 mm eingesetzt. In einer halbseitig verschlossenen Kavität wurden zunächst abgewandelte ISO Zugstäbe mit einer Schulter aus Material 1 vorgespritzt. Bei den verwendeten Polyacetaltypen betrug die Massetemperatur 200°C und die Werkzeugtemperatur 80°C.

Die so gewonnenen halben Zugstäbe aus Polyacetal wurden in einem Umluftofen bei einer Temperatur T_{einleg} von 155 °C vorgewärmt und innerhalb-von etwa 20 sec warm in die vollständig offene Zugstabform eingelegt. In einem zweiten Spritzgießvorgang wurde Material 2 bei unterschiedlichen Massetemperaturen Tₘ und Werkzeugtemperaturen T_{w} mit unterschiedlichen Einspritzgeschwindigkeiten Vₑ in die Zugstabform gespritzt. Es wurden unterschiedliche Nachdrücke pₐ und Nachdruckzeiten tpa verwendet.
Die so erhaltenen, aus zwei Komponenten zusammengesetzten Zugstäbe wurden im Zugversuch nach ISO 527 mit einer Zuggeschwindigkeit von_50 mm/min geprüft. Aus dem Ergebnis des Zugversuches wurde die Zugfestigkeit bis zum Bruch der Stäbe an der Verbundnaht (Verbundfestigkeit) und die dazugehörige Bruchdehnung bestimmt. Für jeden Versuch wurden 10 Zugstäbe geprüft. Die für die 10 Prüfkörper erhaltenen Werte wurden gemittelt. Die Einzelheiten der Versuchsdurchführung und die dabei erhaltenen Ergebnisse sind in der nachfolgenden Tabelle aufgeführt.

| Bsp. Nr. | Material 1¹⁻³⁾ | Material 2⁴⁾ | Tₘ (°C) | T_{w} (°C) | pₐ (bar) | tpa (sec) | vₑ (mm/sec) | Verbundfestigkeit (N/mm²) | Bruchdehnung (%) |
|---|---|---|---|---|---|---|---|---|---|
| 1 | C 9021 | Arnitel EM 400 | 210 | 60 | 35 | 15 | 100 | 2,7 | 2,7 |
| 2 | C 9021 | Arnitel EM 400 | 220 | 60 | 35 | 15 | 100 | 3,0 | 3,3 |
| 3 | C 9021 | Arnitel EM 400 | 230 | 60 | 35 | 15 | 100 | 3,9 | 4,7 |
| 4 | C 9021 | Arnitel EM 400 | 240 | 60 | 35 | 15 | 100 | 4,2 | 5,5 |
| 5 | C 9021 | Arnitel EM 400 | 250 | 60 | 35 | 15 | 100 | 5,2 | 5,6 |
| 6⁵⁾ | C 9021 | Arnitel EM 400 | 250 | 60 | 35 | 15 | 100 | 4,8 | 6,3 |
| 7⁶⁾ | C 9021 | Arnitel EM 400 | 250 | 60 | 35 | 15 | 100 | Keine Haftung | Keine Haftung |
| 8 | C 9021 | Arnitel EM 400 | 250 | 60 | 35 | 15 | 150 | 4,7 | 6,5 |
| 9 | C 9021 | Arnitel EM 400 | 250 | 60 | 35 | 15 | 50 | 4,3 | 5,8 |
| 10 | C 9021 | Arnitel EM 400 | 250 | 60 | 35 | 30 | 100 | 4,1 | 5,3 |
| 11 | C 9021 | Arnitel EM 400 | 250 | 60 | 45 | 30 | 100 | 3,5 | 4,1 |
| 12 | C 9021 | Arnitel EM 400 | 250 | 80 | 35 | 30 | 100 | 3,4 | 3,8 |
| 13 | C 9021 | Arnitel EM 400 | 260 | 80 | 35 | 30 | 100 | 3,1 | 3,3 |
| 14 | C 9021 | Arnitel EM 400 | 260 | 60 | 35 | 15 | 100 | 4,8 | 7,6 |
| 15 | C 9021 | Arnitel EM 400 | 270 | 60 | 35 | 15 | 100 | Keine Haftung | Keine Haftung |
| 16 | S 9064 | Arnitel EM 400 | 210 | 60 | 35 | 15 | 100 | 2,3 | 2,2 |
| 17 | S 9064 | Arnitel EM 400 | 250 | 60 | 35 | 15 | 100 | 3,8 | 5,1 |
| 18⁶⁾ | S 9064 | Arnitel EM 400 | 250 | 60 | 35 | 15 | 100 | Keine Haftung | Keine Haftung |
| 19 | S 9244 | Arnitel EM 400 | 210 | 60 | 35 | 15 | 100 | 1,9 | 2,1 |
| 20 | S 9244 | Arnitel EM 400 | 220 | 60 | 35 | 15 | 100 | 2,0 | 2,0 |
| 21 | S 9244 | Arnitel EM 400 | 230 | 60 | 35 | 15 | 100 | 3,1 | 3,6 |
| 22 | S 9244 | Arnitel EM 400 | 240 | 60 | 35 | 15 | 100 | 3,5 | 4,2 |
| 23 | S 9244 | Arnitel EM 400 | 250 | 60 | 35 | 15 | 100 | 3,9 | 5,0 |
| 24⁶⁾ | S 9244 | Arnitel EM 400 | 250 | 60 | 35 | 15 | 100 | Keine Haftung | Keine Haftung |

| | | | | | | | | | |
|---|---|---|---|---|---|---|---|---|---|
| ¹⁾ Hostaform® C 9021: Polyoxymethylencopolymerisat aus Trioxan und etwa 2 Gew. % Ethylenoxid, Schmelzindex MFR 190/2,16 (ISO 1133): 9 g/10 min, keine Modifizierung (Ticona GmbH) ²⁾ Hostaform® S 9064: Polyoxymethylencopolymerisat aus Trioxan und etwa 2 Gew. % Ethylenoxid, Schmelzindex MFR 190/2,16 (ISO 1133): 9 g/10 min, Modifizierung: 20 Gew.% thermoplastisches Polyurethan (Ticona GmbH) ³⁾ Hostaform® S 9244: Polyoxymethylencopolymerisat aus Trioxan und etwa 2 Gew. % Ethylenoxid, Schmelzindex MFR 190/2,16 (ISO 1133): 9 g/10 min, Modifizierung: 25 Gew. % MBS core-shell-Modifikator aus etwa 80 Gew.%-elastischem Polybutadien-Kern und etwa 20 Gew.% MMA / Styrol Schale mit einer Partikelgröße von etwa 100 nm (Ticona GmbH) ⁴⁾ Arnitel® EM 400: Thermoplastisches Polyetherester-Elastomer bestehend aus Polytetramethylenoxid und Polybutylenterephthalat (DSM) ⁵⁾ Teinleg = 100°C ⁶⁾ T_{einleg} = 23°C | | | | | | | | | |

## Patentansprüche

1. Verbundkörper enthaltend Polyacetal und mindestens ein thermoplastisches Polyester-Elastomeres gebildet durch ein Polyacetal-Formteil, an das ein oder mehrere Formteile aus dem thermoplastischen Polyester-Elastomeren direkt angeformt sind, **dadurch gekennzeichnet, dass** das Polyester-Elastomer ein Polyetherester-Elastomer ist, dass das Polyacetal und das thermoplastische Polyester-Elastomere adhäsiv miteinander verbunden sind und dass die Verbundfestigkeit bei Zugbelastung zwischen dem Polyacetal und dem thermoplastischen Polyester-Elastomeren mindestens 0,5 N/mm², ermittelt im Zugversuch nach ISO 527, beträgt.

2. Verbundkörper nach Anspruch 1, **dadurch gekennzeichnet, dass** die Verbundfestigkeit bei Zugbelastung zwischen dem Polyacetal und dem thermoplastischen Polyester-Elastomeren mindestens 1,0 N/mm², ermittelt im Zugversuch nach ISO 527) beträgt.

3. Verbundkörper nach Anspruch 1, **dadurch gekennzeichnet, dass** als Polyacetal ein Polyoxymethylen-Copolymer verwendet wird.

4. Verbundkörper nach Anspruch 1, **dadurch gekennzeichnet, dass** das Polyacetal-Formteil und/oder das Polyester-Elastomer-Formteil Zusatzstoffe aufweist, die ausgewählt werden aus der Gruppe bestehend aus Stabilisatoren, Nukleierungsmitteln, Schlagzähmodifikatoren, Entformungsmittein, Gleitmitteln, Füll- und Verstärkungsstoffen, Pigmenten, Ruß, Licht- und Flammschutzmitteln, Antistatika, Weichmachern oder optischen Aufhellern.

5. Verbundkörper nach Anspruch 1, **dadurch gekennzeichnet, dass** das thermoplastische Polyester-Elastomer eine Härte im Bereich von Shore A 65 bis Shore D 75 aufweist.

6. Verbundkörper nach Anspruch 1, **dadurch gekennzeichnet, dass** als thermoplastisches Polyester-Elastomer ein thermoplastisches Polyetherester-Elastomer verwendet wird.

7. Verbundkörper nach Anspruch 6, **dadurch gekennzeichnet, dass** das thermoplastische Polyetherester-Elastomer ein Polyetherester ist, der Polybutylenterephthalat als steifes Segment und Polytetramethylenoxid als flexibles Segment aufweist.

8. Verbundkörper nach Anspruch 1, **dadurch gekennzeichnet, dass** das Polyacetal-Formteil ganz oder teilweise mit thermoplastischem Polyester-Elastomer beschichtet ist.

9. Verbundkörper nach Anspruch 1, **dadurch gekennzeichnet, dass** an das Polyacetal-Formteil mindestens ein weiteres Formteil aus thermoplastischem Polyester-Elastomer angeformt ist.

10. Verfahren zur Herstellung des Verbundkörpers nach Anspruch 1, **dadurch gekennzeichnet, dass** mindestens ein Polyacetal-Formteil und mindestens ein weiteres Formteil aus thermoplastischem Polyester-Elastomer durch Mehrkomponentenspritzgussverfahren aneinander angeformt werden, wobei das Polyester-Elastomer auf das Polyacetal-Formteil aufgespritzt wird.

11. Verfahren nach Anspruch 10, **dadurch gekennzeichnet, dass** der Polyacetal-Formkörper vor dem Anspritzen des thermoplastischen Polyester-Elastomeren auf eine Temperatur im Bereich von 80°C bis knapp unter seinen Schmelzpunkt vorgewärmt wird, das thermoplastische Polyester-Elastomer beim Anspritzen an den Polyacetal-Formkörper eine Massetemperatur von 200 bis 300°C aufweist und das Werkzeug auf eine Temperatur im Bereich von 20 bis 140°C temperiert ist.

12. Verfahren nach Anspruch 11, **dadurch gekennzeichnet, dass** der Polyacetal-Formkörper vor dem Anspritzen des thermoplastischen Polyester-Elastomeren auf eine Temperatur im Bereich von 100 bis 160°C vorgewärmt wird, das thermoplastische Polyester-Elastomer beim Anspritzen an den Polyacetal-Formkörper eine Massetemperatur von 220 bis 260°C aufweist und das Werkzeug auf eine Temperatur im Bereich von 30 bis 80°C temperiert ist.

13. Verwendung des Verbundkörpers nach Anspruch 1 als Verbindungs-element, als Funktionsteil mit integrierten Dicht- und/oder Dämpfungs-eigenschaften sowie als rutschfestes und grifffreundliches Element.

## Claims

1. A composite comprising polyacetal and at least one thermoplastic polyester elastomer formed by a polyacetal molding onto which one or more moldings composed of the thermoplastic polyester elastomer have been directly molded, wherein the polyester elastomer is a polyetherester elastomer, wherein the polyacetal and the thermoplastic polyester elastomer have been bonded to one another, and wherein the tensile bond strength between the polyacetal and the thermoplastic polyester elastomer is at least 0.5 N/mm², determined in the tensile test to ISO 527.

2. The composite as claimed in claim 1, wherein the tensile bond strength between the polyacetal and the thermoplastic polyester elastomer is at least 1.0 N/mm², determined in the tensile test to ISO 527.

3. The composite as claimed in claim 1, wherein the polyacetal used comprises a polyoxymethylene copolymer.

4. The composite as claimed in claim 1, wherein the polyacetal molding and/or the polyester elastomer molding has additives which are selected from the group consisting of stabilizers, nucleating agents, impact modifiers, mold-release agents, lubricants, fillers, reinforcing materials, pigments, carbon black, light stabilizers, flame retardants, antistatic agents, plasticizers, and optical brighteners.

5. The composite as claimed in claim 1, wherein the hardness of the thermoplastic polyester elastomer is in the range from Shore A 65 to Shore D 75.

6. The composite as claimed in claim 1, wherein the thermoplastic polyester elastomer used comprises a thermoplastic polyetherester elastomer.

7. The composite as claimed in claim 6, wherein the thermoplastic polyetherester elastomer is a polyetherester that has polybutylene terephthalate as stiff segment and polytetramethylene oxide as flexible segment.

8. The composite as claimed in claim 1, wherein the polyacetal molding has been completely or partially coated with thermoplastic polyester elastomer.

9. The composite as claimed in claim 1, wherein at least one other molding composed of thermoplastic polyester elastomer has been molded onto the polyacetal molding.

10. A process for producing the composite as claimed in claim 1, which comprises using multicomponent injection molding processes to mold at least one polyacetal molding and at least one other molding composed of thermoplastic polyester elastomer onto one another, the polyester elastomer being injected onto the polyacetal molding.

11. The process as claimed in claim 10, wherein, prior to the molding-on of the thermoplastic polyester elastomer, the polyacetal molding is preheated to a temperature in the range from 80°C to just below its melting point, and the melt temperature of the thermoplastic polyester elastomer during the process of molding onto the polyacetal molding is from 200 to 300°C, and the mold has been temperature-controlled to a temperature in the range from 20 to 140°C.

12. The process as claimed in claim 11, wherein, prior to the molding-on of the thermoplastic polyester elastomer, the polyacetal molding is preheated to a temperature in the range from 100 to 160°C, and the melt temperature of the thermoplastic polyester elastomer during the process of molding onto the polyacetal molding is from 220 to 260°C, and the mold has been temperature-controlled to a temperature in the range from 30 to 80°C.

13. The use of the composite as claimed in claim 1 as connector, as functional component with integrated sealing properties and/or with integrated damping properties, or else as non-slip and easy-grip element.

## Revendications

1. Corps composite contenant du polyacétal et au moins un élastomère-polyester thermoplastique constitué par une partie moulée en polyacétal sur laquelle sont appliquées directement par moulage une ou plusieurs parties moulées à base de l'élastomère-polyester thermoplastique, **caractérisé en ce que** l'élastomère-polyester est un élastomère-polyétherester, **en ce que** le polyacétal et l'élastomère-polyester thermoplastique sont liés l'un à l'autre par adhérence et **en ce que** la résistance d'adhérence du composite sous contrainte de traction entre le polyacétal et l'élastomère-polyester thermoplastique est d'au moins 0,5 N/mm², déterminée dans l'essai de traction selon ISO 527.

2. Corps composite selon la revendication 1, **caractérisé en ce que** la résistance d'adhérence du composite sous contrainte de traction entre le polyacétal et l'élastomère-polyester thermoplastique est d'au moins 1,0 N/mm², déterminée dans l'essai de traction selon ISO 527.

3. Corps composite selon la revendication 1, **caractérisé en ce qu'**on utilise comme polyacétal un copolymère polyoxyméthylène.

4. Corps composite selon la revendication 1, **caractérisé en ce que** la partie moulée en polyacétal et/ou la partie moulée en élastomère-polyester comprend des additifs qui sont choisis dans l'ensemble constitué par les stabilisants, les agents de nucléation, les modificateurs anti-choc, les agents de démoulage, les lubrifiants, les charges et renforts, les pigments, le noir de carbone, les photoprotecteurs et agents ignifuges, les agents antistatiques, les plastifiants ou les azurants optiques.

5. Corps composite selon la revendication 1, **caractérisé en ce que** l'élastomère-polyester thermoplastique présente une dureté dans la plage de Shore A 65 à Shore D 75.

6. Corps composite selon la revendication 1, **caractérisé en ce qu'**on utilise comme élastomère-polyester thermoplastique un élastomère-polyétherester thermoplastique.

7. Corps composite selon la revendication 6, **caractérisé en ce que** l'élastomère-polyétherester thermoplastique est un polyétherester qui comporte du poly(butylène-téréphtalate) en tant que segment rigide et du polyoxytétraméthylène en tant que segment flexible.

8. Corps composite selon la revendication 1, **caractérisé en ce que** la partie moulée en polyacétal est revêtue en partie ou en totalité d'élastomère-polyester thermoplastique.

9. Corps composite selon la revendication 1, **caractérisé en ce que** sur la partie moulée en polyacétal est appliquée par moulage au moins une autre partie moulée à base d'élastomère-polyester thermoplastique.

10. Procédé pour la fabrication du corps composite selon la revendication 1, **caractérisé en ce qu'**au moins une partie moulée en polyacétal et au moins une autre partie moulée à base d'élastomère-polyester thermoplastique sont moulées l'une sur l'autre par des procédés de moulage par injection de plusieurs composants, l'élastomère-polyester étant injecté sur la partie moulée en polyacétal.

11. Procédé selon la revendication 10, **caractérisé en ce qu'**avant l'application par injection de l'élastomère-polyester thermoplastique le corps moulé en polyacétal est préchauffé jusqu'à une température dans la plage allant de 80 °C à juste au-dessous de son point de fusion, l'élastomère-polyester thermoplastique présente lors de l'application par injection sur le corps moulé en polyacétal une température de la masse de 200 à 300 °C et l'outil est maintenu à une température dans la plage de 20 à 140 °C.

12. Procédé selon la revendication 11, **caractérisé en ce qu'**avant l'application par injection de l'élastomère-polyester thermoplastique le corps moulé en polyacétal est préchauffé jusqu'à une température dans la plage allant de 100 °C à 160 °C, l'élastomère-polyester thermoplastique présente lors de l'application par injection sur le corps moulé en polyacétal une température de la masse de 200 à 260 °C et l'outil est maintenu à une température dans la plage de 30 à 80 °C.

13. Utilisation du corps composite selon la revendication 1, en tant qu'élément d'assemblage, en tant que partie fonctionnelle à propriétés d'étanchéité et/ou d'amortissement intégrées ainsi que comme élément antidérapant et facilitant la prise.
